(19)

Europäisches Patentamt

European Patent Office

Office européen des brevets

(11) **EP 4 494 995 A1**

(12) **EUROPEAN PATENT APPLICATION**
published in accordance with Art. 153(4) EPC

(43) Date of publication:
**22.01.2025 Bulletin 2025/04**

(21) Application number: **22931998.3**

(22) Date of filing: **15.03.2022**

(51) International Patent Classification (IPC):
**B63B 49/00** (2006.01)　　**B63B 79/10** (2020.01)

(52) Cooperative Patent Classification (CPC):
**B63B 49/00; B63B 79/10**

(86) International application number:
**PCT/JP2022/011586**

(87) International publication number:
**WO 2023/175713 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Pioneer Corporation
Tokyo 113-0021 (JP)**
• **Pioneer Smart Sensing Innovations Corporation
Tokyo 113-0021 (JP)**

(72) Inventors:
• **KATO, Masahiro
Kawagoe-shi, Saitama 350-8555 (JP)**
• **KATO, Masahiro
Kawagoe-shi, Saitama 350-8555 (JP)**
• **MATSUZAKI, Shin
Kawagoe-shi, Saitama 350-8555 (JP)**

(74) Representative: **Viering, Jentschura & Partner
mbB
Patent- und Rechtsanwälte
Am Brauhaus 8
01099 Dresden (DE)**

(54) **INFORMATION PROCESSING DEVICE, CONTROL METHOD, PROGRAM, AND STORAGE MEDIUM**

(57)　　The controller 13 of the information processing device 1A functions as the acquisition unit, the cluster generation unit, and the ship direction estimation unit. The acquisition unit is configured to acquire measurement data which is a set of data representing a plurality of measured points measured by a measurement device. The cluster generation unit is configured to generate, based on normal lines of the measured points of a ship, one or more clusters of the measured points of the ship. The ship direction estimation unit is configured to estimate a direction of the ship based on a first cluster which is a cluster having a largest number of the measured points of the ship.

FIG. 17

```
        ┌──────────────────────────────────────────┐
        │   SIDE SURFACE POINT EXTRACTION PROCESS START │
        └──────────────────────────────────────────┘
S41                        │
        ┌──────────────────────────────────────────┐
        │  CALCULATE DISTANCE L₁ BETWEEN TARGET POINT AND │
        │   EVERY SIDE SURFACE CANDIDATE POINT &          │
        │  CALCULATE THRESHOLD RADIUS R₁ = e·L₁ USING     │
        │          COEFFICIENT e &                        │
        │     CALCULATE NORMAL LINE USING R₁              │
        └──────────────────────────────────────────┘
S42                        │
        ┌──────────────────────────────────────────┐
        │  SELECT TARGET POINT FROM UNCLASSIFIED POINTS &  │
        │       CLASSIFY INTO NEW CLUSTER                  │
        └──────────────────────────────────────────┘
S43                        │
        ┌──────────────────────────────────────────┐
        │  CLASSIFY SIDE SURFACE CANDIDATE POINT HAVING    │
        │  NORMAL DIRECTION DIFFERENCE FROM TARGET POINT   │
        │  SMALLER THAN NORMAL THRESHOLD VALUE f INTO      │
        │       SAME CLUSTER AS TARGET POINT               │
        └──────────────────────────────────────────┘
          S44              │
Yes  ◇ ANY UNCLASSIFIED POINT ? ◇
                           │ No
S45                        │
        ┌──────────────────────────────────────────┐
        │ EXTRACT CLUSTER HAVING LARGEST NUMBER OF POINTS  │
        │          AS SIDE SURFACE POINT                   │
        └──────────────────────────────────────────┘
                           │
                  ┌─────────────┐
                  │     END     │
                  └─────────────┘
```

Calculate normal line equations:
- Threshold radius: $R_1 = e \cdot L_1$

**Description**

TECHNICAL FIELD

The present disclosure relates to a process in berthing a ship at a shore.

BACKGROUND

Conventionally, there is known a technique for supporting berthing (getting ashore) a ship at a wharf. For example, Patent Literature 1 discloses an autonomous berthing device configured to autonomously control a ship to berth at a shore (wharf), wherein the autonomous berthing device controls the posture of the ship so that a lidar can receive a light emitted by the lidar and reflected by an object in the vicinity of the berthing place.

PRIOR ART DOCUMENTS

PATENT LITERATURE

Patent Literature 1: JP 2020-59403A

SUMMARY

PROBLEM TO BE SOLVED BY THE INVENTION

It is conceivable to install a measurement device, such as a lidar, at the berthing place in order to allow for autonomous berthing / leaving without mounting a measurement device, such as a lidar, on a ship. In this case, it is necessary to build a system with a measurement device at the berthing place and an ability of transmitting information, wherein the system calculates, based on the measurement data of the ship acquired by the measurement device, the distance to the ship and the direction of the ship to transmit the calculation result to the ship. Then, the ship system converts the received distance and direction in accordance with its own ship's standard, and controls the autonomous berthing and leaving. According to this aspect, it is possible to safely and smoothly perform autonomous berthing and leaving in the same manner as in the case of mounting the measurement device on the ship. In this case, by installing the measurement device at the berthing place, the approximate size of the ship can be measured, so it is also possible to inform the ship of an appropriate berthing position. On the other hand, in this aspect, it is necessary at least to identify the direction to the ship based on the measurement data obtained by measuring the ship. Since the ship contains many non-uniform shapes, it is necessary to devise a method to accurately estimate the ship's direction based on the measurement data obtained by measuring the ship.

The present disclosure has been made in order to solve the above issue, and it is an object of the present invention to provide an information processing device capable of accurately estimating the direction of the ship based on the measurement data obtained by measuring the ship.

MEANS FOR SOLVING THE PROBLEM

One invention is an information processing device including:

an acquisition unit configured to acquire measurement data, which is a set of data representing a plurality of measured points measured by a measurement device;
a cluster generation unit configured to generate, on a basis of normal lines of the measured points of a ship, one or more clusters of the measured points of the ship; and
a ship direction estimation unit configured to estimate a direction of the ship based on a first cluster, which is the cluster having a largest number of the measured points.

Another invention is a control method executed by a computer, the control method including:

acquiring measurement data, which is a set of data representing a plurality of measured points measured by a measurement device;
generating, on a basis of normal lines of the measured points of a ship, one or more clusters of the measured points of the ship; and
estimating a direction of the ship based on a first cluster, which is the cluster having a largest number of the measured points.

Still another invention is a program causing a computer to:

acquire measurement data, which is a set of data representing a plurality of measured points measured by a measurement device;
generate, on a basis of normal lines of the measured points of a ship, one or more clusters of the measured points of the ship; and
estimate a direction of the ship based on a first cluster, which is the cluster having a largest number of the measured points.

BRIEF DESCRIPTION OF THE DRAWINGS

[FIG. 1] It is a schematic diagram of an operation support system.
[FIG. 2] It is a block diagram showing a hardware configuration of an information processing device.
[FIG. 3] It is a bird's-eye view of the target ship and berthing place.
[FIGS. 4A to 4C] FIG. 4A is a bird's-eye view showing a condition in which the berthing place and the target ship are parallel.
FIG. 4B is a bird's-eye view showing a condition in which the bow of the target ship is directed to the berthing place.
FIG. 4C is a bird's-eye view showing a condition in which the stem of the target ship is directed to the berthing place.
[FIG. 5] It illustrates an example of functional blocks related to the direction calculation of the target ship.
[FIG. 6] It is a detailed functional block diagram.
[FIGS. 7A and 7B] FIG. 7A is a bird's-eye view of the target ship and the berthing place with a clear indication of the measured points.
FIG. 7B illustrates the clusters of measured points formed by a clustering method with a clear indication of ellipse frames circling them.
[FIG. 8] It illustrates an outline of the extraction process of the side surface candidate points.
[FIGS. 9A to 9E] FIGS. 9A to 9E illustrate a flow of the extraction process of the side surface candidate points.
[FIGS. 10A to 10C] FIG. 10A is a bird's-eye view of the target ship with a clear indication of the side surface candidate points.
FIG. 10B is a bird's-eye view of the target ship which clarifies the direction of the normal for each side surface candidate point.
FIG. 10C is a bird's-eye view of the target ship with a clear indication of the largest cluster of the side surface candidate points.
[FIGS. 11A to 11C] FIGS. 11A to 11C indicate the flow of the process of the clustering based on the normal lines.
[FIGS. 12A to 12E] FIG. 12A to 12E illustrates the flow of process performed by the direction calculation unit.
[FIGS. 13A to 13C] FIG. 13A illustrates an example of calculating the variance by removing each of the selected points at both ends.
FIG. 13B illustrates the case where the change in the variance from the previous one calculated by removing either one of selected points at both ends is within a threshold value.
FIG. 13C illustrates a straight line based on X-Y components of the first principal component vector of the point clouds of identified side surface points.
[FIG. 14] It is an example of a flowchart showing an overview of point cloud data process.
[FIG. 15] It is a flowchart of a ship point cloud extraction process.
[FIG. 16] It is a flowchart of a side surface candidate point extraction process.
[FIG. 17] It is a flowchart of the side surface extraction process.
[FIG. 18] It is a flowchart of a ship direction calculation process.
[FIG. 19] It illustrates an outline of the pier distance calculation.
[FIG. 20] It illustrates an example of installation of lidar and information processing device.

DETAILED DESCRIPTION OF PREFERRED EMBODIMENTS

According to a preferred embodiment of the present invention, there is provided an information processing device including: an acquisition unit configured to acquire measurement data, which is a set of data representing a plurality of measured points measured by a measurement device; a cluster generation unit configured to generate, on a basis of normal lines of the measured points of a ship, one or more clusters of the measured points of the ship; and a ship direction estimation unit configured to estimate a direction of the ship based on a first cluster, which is the cluster having a largest number of the measured points. According to this embodiment, the information processing device can accurately estimate the direction of the ship.

In one aspect of the information processing device, the acquisition unit is configured to extract, on a basis of a clustering based on distances among the plurality of the measured points, the measured points of the ship. According to this aspect, the information processing device can suitably acquire the measured points of the ship.

In another aspect of the information processing device, in grouping the measured points on the basis of the clustering based on the distances, the acquisition unit is configured to set a threshold value, of a point-to-point distance between measured points, for determining that the measured points belong a same group, on a basis of a measurement distance of the measured points. With this aspect, the information processing device can accurately perform a distance-based clustering.

In still another aspect of the information processing device, the acquisition unit is configured to extract the measured points of the ship, on a basis of a group having a number of the measured points equal to or larger than a point number threshold value among groups of the measured points formed on a basis of the clustering based on the distances, wherein the point number threshold value is set based on measurement distances of the measured points for each of the groups. With this aspect, the information processing device can accurately determine the size of the group that can be a candidate for a ship.

In still another aspect of the information processing device, the cluster generation unit is configured to divide the measured points of the ship into lines in a horizontal direction and select, based on a distribution of the measured points for each of the lines, the line to be used for calculating the normal lines. According to this aspect, the information processing device can accurately select the target measured points subject to calculation of their normal lines.

In still another aspect of the information processing device, the cluster generation unit is configured to calculate the normal line for each measured point of the ship, using other measured points of the ship, the other measured points existing within a threshold radius from the each measured point in accordance with a measurement distance of the each measured point. In this way, the information processing device can stably calculate the normal lines used for clustering.

In still another aspect of the information processing device, the ship direction estimation unit is configured to calculate the ship direction based on a variance in the measured points which belong to the first cluster. According to this aspect, the information processing device can suitably calculate the direction of the ship based on the first cluster.

In still another aspect of the information processing device, the ship direction estimation unit is configured to determine, on a basis of a difference, in the variance of a third principal component, between presence and absence of a measured point positioned at an edge among the measured points which belong to the first cluster, whether or not to calculate the direction based on the variance including the measured point positioned at the edge. According to this aspect, the information processing device can suitably calculate the ship direction by excluding the measured points corresponding to the curved part.

According to another preferred embodiment of the present disclosure, there is provided a control method performed by a computer, including: acquiring measurement data, which is a set of data representing a plurality of measured points measured by a measurement device; generating, on a basis of normal lines of the measured points of a ship, one or more clusters of the measured points of the ship; and estimating a direction of the ship based on a first cluster, which is the cluster having a largest number of the measured points. The computer can accurately estimate the ship's direction by performing this control method.

According to another preferred embodiment of the present disclosure, there is provided a program causing a computer to: acquire measurement data, which is a set of data representing a plurality of measured points measured by a measurement device; generate, on a basis of normal lines of the measured points of a ship, one or more clusters of the measured points of the ship; and estimate a direction of the ship based on a first cluster, which is the cluster having a largest number of the measured points. The computer can accurately estimate the ship's direction by executing this program. In some embodiments, the program is stored in a storage medium.

EMBODIMENTS

Hereinafter, preferred embodiments of the present invention are described below with reference to drawings.

(1) Overview of Driving Support System

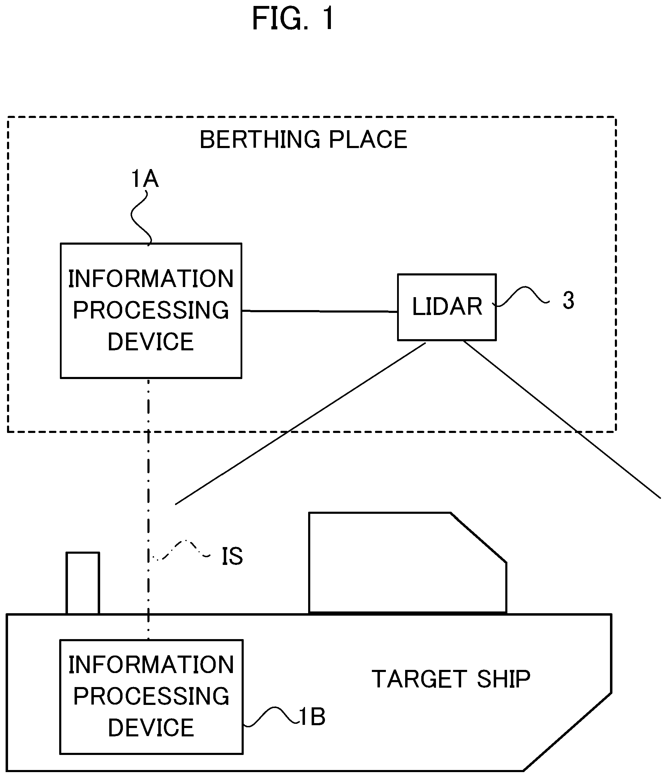

FIG. 1 is a schematic configuration of an operation support system according to the present embodiment. The operation support system is a system for supporting the operation of a ship which is a moving body, and includes an information processing device 1A, a lidar 3 provided in a berthing place where the ship is to be berthed, and an information processing device 1B mounted on the ship. In the following, the term "berthing place" shall mean a generic term for any structural object, such as a wharf and a pier, where the target ship is to be berthed.

The information processing device 1A is electrically connected to the lidar 3, and estimates the state of the target ship such as the direction of the target ship with respect to the berthing place, based on the data outputted by the lidar 3. Then, the information processing device 1 A supplies information representing the estimated state (also referred to as "ship state information IS") to the information processing device 1B. The calculation method of the direction of the target ship with respect to the berthing place will be described later.

The information processing device 1B supports the operation of the target ship based on the ship state information IS supplied from the information processing device 1A. In this case, the information processing device 1B controls the berthing or leaving of the target ship based on the distance and direction of the target ship indicated by the ship state information IS. For example, the target ship includes a driving source such as an engine or an electric motor, a screw for generating a propulsive force in the traveling direction based on the driving force from the driving source, a thruster for generating a lateral propulsive force based on the driving force from the driving source, and a rudder which is a mechanism for controlling the traveling direction of the target ship, and the information processing device 1B performs control of these components. In another example, the information processing device 1B may perform display control based on the ship state information IS. The information processing device 1B may be a navigation device provided on a ship or an electronic control device built in the ship. Further, the information processing device 1B may be electrically connected to various sensors provided on the target ship, an input device, a display device, and/or a sound output device or the like to perform various controls.

The lidar (Lidar: Light Detection and Ranging, or Laser Illuminated Detection And Ranging) 3 is provided at the berthing place, and performs measurement of the target ship approaching the berthing place, and supplies the measured data to the information processing device 1A. The lidar 3 is an external sensor configured to emit pulse lasers within a predetermined angle range in the horizontal direction and in the vertical direction and thereby discretely measures the distance to an object existing in the external space and generates three dimensional point cloud data indicative of the position of the object. The lidar 3 is equipped with a radiation unit for radiating a laser beam while changing the irradiation direction, a light receiving unit for receiving the reflected light (scattered light) of the radiated laser beam, and an output unit for outputting data based on the received light signal outputted by the light receiving unit. Each data measured for each irradiation direction of the pulsed laser is generated based on the irradiation direction corresponding to the laser beam received by the light receiving unit and the response delay time of the laser beam which is identified by the received light signal described above. Hereafter, a point, or its measurement data, measured through irradiation with the laser beam within the measurement range of the lidar 3 is also referred to as "measured point".

The point cloud information can be regarded as an image (frame), wherein each pixel of the image corresponds to each measurement direction and the pixel value of the each pixel is set as the measurement distance and the reflection intensity value in the each measurement direction. In this case, pixels arranged in the vertical direction correspond to different emitting directions of the laser light in the elevation / depression angle and pixels arranged in the horizontal direction correspond to different emitting directions of the laser light in the horizontal angle. Hereafter, provided that the point cloud data is regarded as an image, the measured points corresponding to a sequence of pixels (i.e., a column) having the same positional index in the horizontal direction is also referred to as "vertical line". In addition, provided that the point cloud data is regarded as an image, the positional index in the horizontal direction is referred to as "horizontal number", and the positional index in the vertical direction is referred to as "vertical number". A horizontal line with the same vertical number is also referred to as the "horizontal scan line".

It is noted that the lidar 3 is not limited to the above-described scan type lidar and may be a flash type lidar for generating three-dimensional data by diffusing and radiating laser beams into the field of view of a two-dimensional array sensor. The lidar 3 is an example of the "measurement device" in the present invention.

(2) Configuration of Information Processing Device

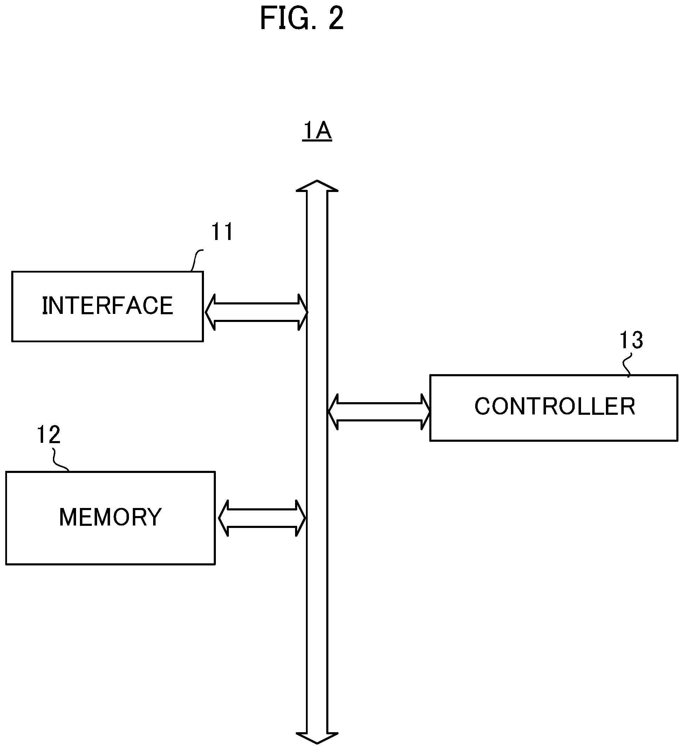

FIG. 2 is a block diagram illustrating an exemplary hardware configuration of an information processing device 1A. The information processing device 1A mainly includes an interface 11, a memory 12, and a controller 13. Each of these elements is connected to each other through a bus line.

The interface 11 performs the interface operation related to the transfer of data between the information processing device 1A and an external device. In the present embodiment, the interface 11 acquires output data from each sensor of the sensor group 2 and supplies it to the controller 13. The interface 11 transmits, for example, the ship state information IS generated by the controller 13 to the information processing device 1B. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, a sound output device, and the like.

The memory 12 is configured by various volatile and non-volatile memories such as a RAM (Random Access Memory), a ROM (Read Only Memory), a hard disk drive, a flash memory, and the like. The memory 12 stores a program for the controller 13 to perform a predetermined process. The program executed by the controller 13 may be stored in a storage medium other than the memory 12.

Further, the memory 12 stores information required for processing performed by the information processing device 1A in the present exemplary embodiment. For example, the memory 12 may store information on the size of the down-sampling in applying a down-sampling to the point cloud data obtained by one cycle of scanning by the lidar 3.

The controller 13 includes one or more processors, such as a CPU (Central Processing Unit), a GPU (Graphics Processing Unit), and a TPU (Tensor Processing Unit), to control the entire information processing unit 1A. In this case, the controller 13 performs processing related to the operation support of the target ship or the like by executing a program stored in the memory 12 or the like. The controller 13 functions as an "acquisition unit", a "cluster generation unit", a "ship direction estimation unit", and a computer for executing the program. A detailed block configuration of the controller 13 will be described later.

The controller 13 is not limited to be implemented by software using a program, it may be implemented by any combination of hardware, firmware, software and/or the like. The controller 13 may also be a user-programmable integrated circuit, such as a FPGA (Field-Programmable Gate Array) and a microcontroller, an ASSP (Application Specific Standard Produce) and an ASIC (Application Specific Integrated Circuit). In this case, the program executed by the controller 13 according to the embodiment may be implemented by using the above-mentioned integrated circuit.

(3) Outline of Ship Direction Estimation Method

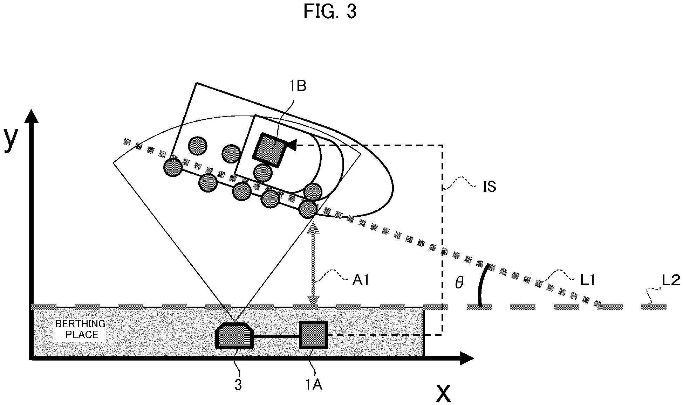

Next, an outline of the estimation methods of the direction of the target ship by the information processing device 1A will be described referring to FIG. 3.

FIG. 3 shows a bird's-eye view of the target ship and berthing place. In FIG. 3, the x-axis and y-axis of the world coordinate system, which is an absolute coordinate system with respect to a predetermined position on the ground (here, the berthing position), are clearly shown. The x-and y-axes are orthogonal to each other on a horizontal plane. A filled circle in the figure indicates a measured point of the target ship.

The information processing device 1A calculates a straight line L1 along the side surface of the target ship based on the point cloud (also referred to as "ship point cloud") of the target ship represented by the point cloud data generated by the lidar 3. Then, the information processing device 1A calculates the angle θ between the straight line L1 and the straight line L2 along the edge (side surface) of the berthing place and identifies it as the direction of the target ship with respect to the berthing place. It is noted that the information indicating the straight line L2 is stored in the memory 12 or the like in advance, for example. Furthermore, the information processing device 1A identifies the nearest measured point (i.e., the measured point having the longest perpendicular line to the linear L2) to the berthing place among the ship point cloud. Then, the information processing device 1A calculates the distance (see the arrow A1) between the identified measured point and the straight line L2 and identifies the calculated distance as the distance (pier distance) between the berthing place and the target ship. Then, the information processing device 1A transmits the ship state information IS representing the calculated direction and distance of the target ship to the information processing device 1B.

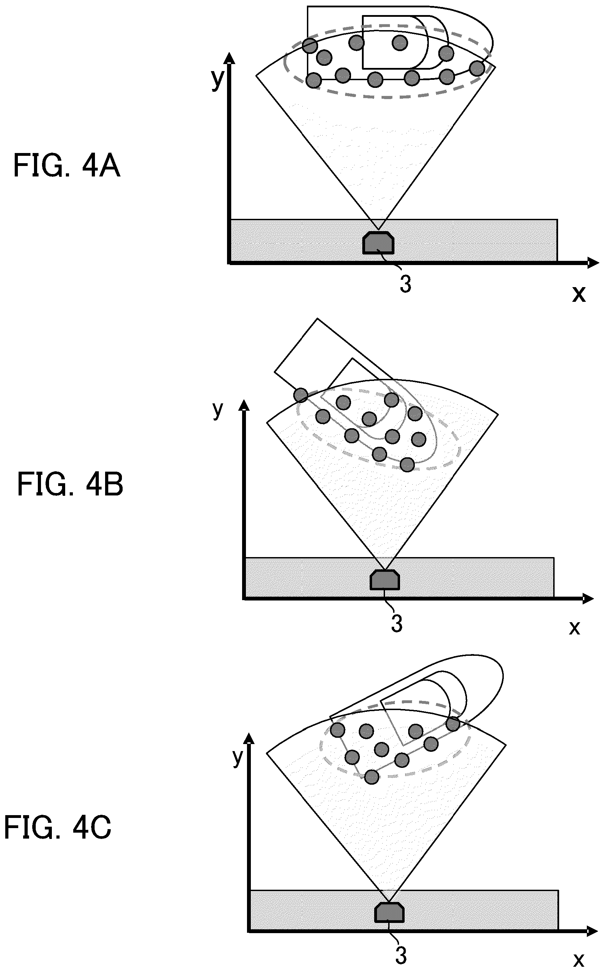

Since the shape of the target ship is not configured by uniform flat surfaces, accurate calculation (i.e., accurate calculation of the straight line L1) of the direction of the target ship is not easy. Issues in calculating the direction of the target ship will be described with reference to FIGS. 4A to 4C.

FIG. 4A is a bird's-eye view showing a condition in which the berthing place and the target ship are parallel to each other, FIG. 4B is a bird's-eye view showing a state in which the bow of the target ship is directed to the berthing place, and FIG. 4C is a bird's-eye view showing a state in which the stem of the target ship is directed to the berthing place. In FIG. 4A to FIG. 4C, each measured point of the target ship is indicated by a circle, and the distribution (dispersion) of the measured points is represented by a dashed ellipse.

Since the ship has a complicated shape that is not a continuous plane, the point cloud data of the target ship contains a lot of data of the measured points other than the planar part and therefore the calculation of the direction of the target ship based on the point cloud data of the target ship acquired by the lidar 3 is not easy. When the target ship is parallel to the berthing place as shown in FIG. 4A, there is a possibility that the direction of the target ship can be calculated by detecting the direction having the largest variance in the measured points of the target ship. In contrast, when the bow side or stem side is directed to the berthing place as shown in FIG. 4B or FIG. 4C, the extending direction of the measured points of the ship and the direction of the ship do not exactly match. Thus, it is not easy to accurately calculate the target ship's direction in this case.

Taking the above into consideration, in the present embodiment, the information processing device 1A extracts the ship point cloud through the clustering, and then further extracts the measured points of the planar part of the side surface of the target ship to thereby calculate the direction of the target ship based on the extracted measured points.

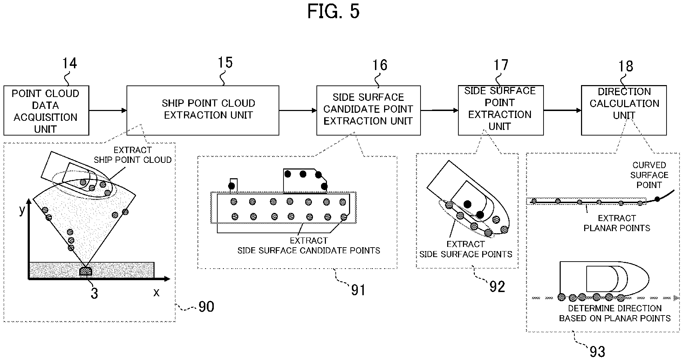

FIG. 5 is an exemplary functional block of the controllers 13 of the information processing device 1A related to the direction calculation of the target ship. The controller 13 functionally includes a point cloud data acquisition unit 14, a ship point cloud extraction unit 15, a side surface candidate point extraction unit 16, a side surface point extraction unit 17, and a direction calculation unit 18. Further, the process outlines regarding the ship point cloud extraction unit 15, the side surface candidate point extraction unit 16, the side surface point extraction unit 17, and the direction calculation unit 18 are shown by balloons 90 to 93. In FIG. 5, any blocks to exchange data with each other are connected to each other by a solid line, but the combination of blocks to exchange data with each other not limited thereto. The same applies to the drawings of other functional blocks described below.

The point cloud data acquisition unit 14 acquires the point cloud data generated by the lidar 3 in each frame cycle. In some embodiments, among the point cloud data generated by the lidar 3, the point cloud data acquisition unit 14 identifies data indicating the position below the water surface position as the water surface reflection data (i.e., erroneous detection data) and removes the data from the point cloud data. For example, the point cloud data acquisition unit 14 estimates the water surface position based on the mean value in the height direction of the point cloud data generated by the lidar 3 in such a condition that there is no object other than the water surface in the vicinity. In some embodiments, the point cloud data acquisition unit 14 applies a down-sampling, which is a process of integrating the measured points for each grid space with a predetermined size, to the point cloud data after removing the water surface reflection data. In some embodiments, the down-sampling may be performed before removal of data reflected at the water surface.

The ship point cloud extraction unit 15 extracts the ship point cloud, which is a cluster of the measured points of the target ship, by performing clustering on the measured points represented by the point cloud data acquired by the point cloud data acquisition unit 14. In the balloon 90, the cluster (see the elliptic circle) having the largest number of elements among clusters is extracted as the ship point cloud.

Based on the distribution of the measured points for each horizontal scan line, the side surface candidate point extraction unit 16 extracts candidate points (also referred to as "side surface candidate points") for the measured points of the side surface of the target ship from the ship point cloud. The balloon 91 indicates that a plurality of measured points on horizontal scan lines with wide and dense distribution are extracted as the side surface candidate points.

The side surface point extraction unit 17 extracts, from the side surface candidate points, the measured points (also referred to as "side surface points") of the side surface of the target ship which are determined to have similar normal lines, through the clustering using normal lines from respective side surface candidate points. The balloon 92 indicates that the measured points circled by the elliptical frame are extracted as side surface points.

The direction calculation unit 18 removes, from the side surface points extracted by the side surface point extraction unit 17, the measured points (also referred to as "curved surface points") corresponding to the curved part of the ship and extracts the side surface point (also referred to as "planer points") after the removal to calculate the direction of the target ship based on the extracted planer points. The balloon 93 indicates a process of extracting planar points from the side surface points and a process of determining the direction by using the planar points.

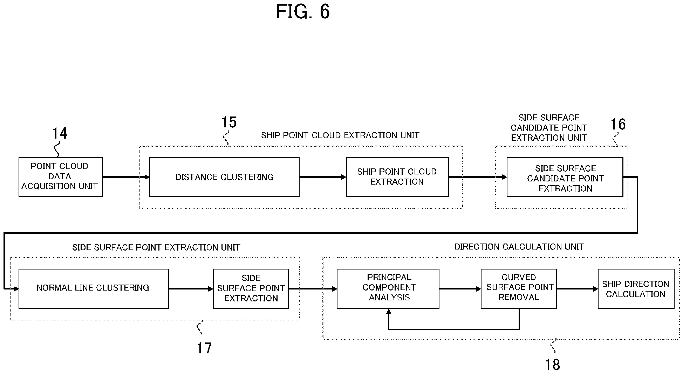

FIG. 6 is a detailed block diagram of the functional blocks shown in FIG. 5. As shown in FIG. 6, the ship point cloud extraction unit 15 include a distance clustering block configured to perform clustering of the measured points based on the distance, and a ship point cloud extraction block configured to extract the ship point cloud based on the result of the clustering. The side surface candidate point extraction unit 16 includes a side surface candidate point extraction block. The side surface point extraction unit 17 includes a normal line clustering block configured to perform clustering of side surface candidate points based on the normal lines from respective side surface candidate points and a side surface point extraction block configured to extract side surface points based on the result of the clustering. The direction calculation unit 18 includes a principal component analysis block configured to apply a principal component analysis to the side surface points, a curved surface point removal block configured to remove the curved surface points based on the result of the principal component analysis, and a ship direction calculation block configured to calculate the direction of the target ship based on the side surface points (i.e., planar points) after the removal of the curved surface points.

(4) Extraction of Ship Point Cloud

First, the extraction process of the ship point cloud will be described in detail. Since the lidar 3 is installed in the berthing place to face the sea side so as to be able to sense the target ship at the berthing, the lidar is not supposed to sense any large object except for the target ship. Taking the above into consideration, the ship point cloud extraction unit 15 performs distance-based clustering of the measured points represented by the point cloud data, thereby to extract the ship point cloud having the largest number of the points which is equal to or larger than a predetermined number.

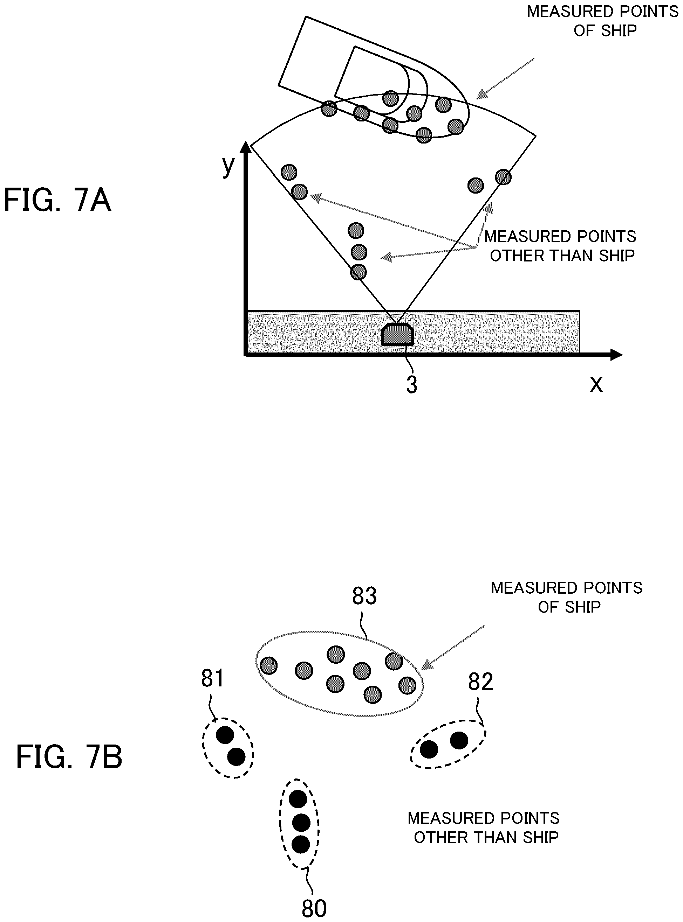

FIG. 7A is a bird's-eye view of the target ship and the berthing place with clear indication of the measured points. As shown in FIG. 7A, the measured points represented by the point cloud data acquired by the point cloud data acquisition unit 14 include not only the measured points of the target ship but also measured points other than the target ship. FIG. 7B illustrates groups of measured points formed by clustering circled by elliptic frames 80 to 83. In this example, four groups are formed, and the group of the measured points having the largest number of elements circled by the ellipse frame 83 is extracted as the ship point cloud among the groups.

Here, a description will be given of a specific example of the above-described clustering. The ship point cloud extraction unit 15 performs clustering by the point-to-point distance among the measured points. In this case, the ship point cloud extraction unit 15 selects every measured point as a target point in order, and calculates the distance between the target point and each of the other measured points. Then, if the distance between the two points is smaller than a predetermined threshold value (also referred to as "grouping threshold value"), the ship point cloud extraction unit 15 identifies that the two points belong to the same group. Then, the ship point cloud extraction unit 15 identifies a group having the number of points which is equal to or larger than a predetermined threshold value (also referred to as "point number threshold value") as a cluster to be a candidate for the ship point cloud.

Here, since the distance to the target ship is not constant, the point-to-point distance among the ship point cloud is also not constant, and the number of points is not constant. Further, in general, since the laser beam of the lidar 3 is outputted radially, the farther the measured point is, the longer the the interval between the neighboring measured points becomes. Besides, the number of detected points increases if a measured object exists in the vicinity, whereas the number of detected points decreases if the measured object with the same size exists far.

Taking the above into consideration, the ship point cloud extraction unit 15 sets the grouping threshold value and the point number threshold value in accordance with the measurement distance. Specifically, the ship point cloud extraction unit 15 determines each threshold value using a predetermined coefficient "a" and a predetermined coefficient "b" as follows.

$$\text{Grouping threshold value} = a \times (\text{measurement distance of the target point})$$

$$\text{Point number threshold value} = b \ / \ (\text{distance to the center of gravity of the group})$$

Thus, the ship point cloud extraction unit 15 determines whether or not the neighboring measured points belong to the same group using the grouping threshold value corresponding to the measurement distance of each target point. Further, the ship point cloud extraction unit 15 calculates the distance to the center of gravity of each group after grouping, and sets a point number threshold value corresponding thereto for each group. Then, the ship point cloud extraction unit 15 determines whether or not each group is a cluster as a candidate for the ship point cloud, using the set point number threshold value. Thus, it is possible to perform the clustering determination in the substantial uniform condition as possible regardless of the distance between the object and the lidar 3. In the example shown in FIG. 7B, for the group identified by the elliptic frame 80, since the distance to the target point is close, a smaller grouping threshold value and a larger point number threshold value are set. On the other hand, for the group identified by the elliptic frame 83, since the distance to the target point is far, a larger grouping threshold value and a smaller point number threshold value are set. Then, the ship point cloud extraction unit 15 extracts, among the clusters as candidates for the ship point cloud, the cluster (see the elliptic frame 83) having the largest number of the elements as the ship point cloud.

(5) Extraction of Side Surface Candidate Point

The ship point cloud extracted by clustering include many measured points other than the side surface which is a continuous plane. If many measured points other than the plane are included, the accuracy of the side surface extraction by clustering using the normal lines by the side surface point extraction unit 17 is likely to decrease. Therefore, as a pre-processing for performing the clustering according to the direction of the normal line by the side surface point extraction unit 17, the side surface candidate point extraction unit 16 removes, in consideration of the shape of the target ship, points clearly determined not to constitute the side surface of the target ship from the ship point cloud and identifies the ship point cloud after the removal as side surface candidate points.

Specifically, the side surface candidate point extraction unit 16 assigns a line number to each of the horizontal scan lines and divides the ship point cloud in units of the line number. Here, the width of the distribution of the measured points on the horizontal scan lines overlapping with the target ship becomes the longest, and the width of the distribution of the measured points of the horizontal scan lines overlapping with the steering room of the ship protruding at the top becomes shorter. Therefore, the side surface candidate point extraction unit 16 identifies the ship point cloud belonging to a horizontal scan line group having the longest distance between both ends of the points on each horizontal scan line as the side surface candidate points. In order to exclude such a horizontal scan line that the ship point cloud is formed sparsely only at the both ends, the side surface candidate point extraction unit 16 excludes a horizontal scan line having the number of points of the ship point cloud which is smaller than a predetermined value.

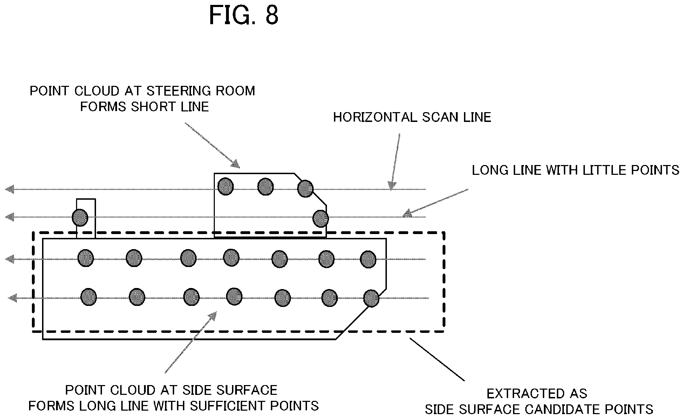

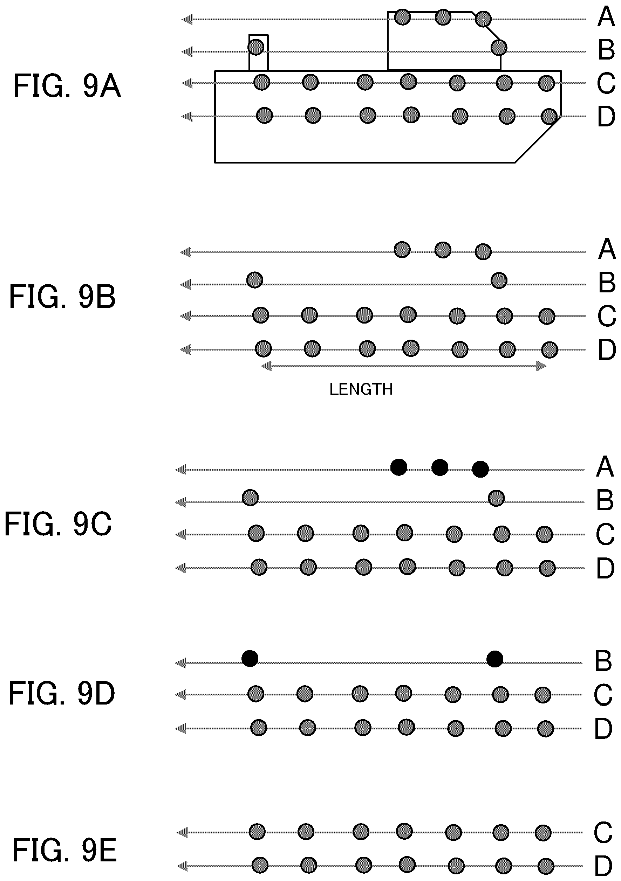

FIG.8 illustrates the overview of the extraction process of the side surface candidate points. Further, FIGS. 9A to 9E illustrate a flow of the extraction process of the side surface candidate points. In FIGS. 8 and 9A to 9E, four horizontal scan lines A to D and ship point cloud on each horizontal scan line are clearly shown.

First, as shown in FIG. 9A, the side surface candidate point extraction unit 16 assigns the numbers A to D to horizontal scan lines on which a ship point cloud exists, respectively. Then, as shown in FIG. 9B, the side surface candidate point extraction unit 16 calculates the distance between the both ends of the points for each horizontal scan line with the assigned number. Then, as shown in FIG. 9C, the side surface candidate point extraction unit 16 removes the points on the horizontal scan line A, since the distance between both ends of the points is shorter than the predetermined distance. Further, as shown in FIG. 9D, the side surface candidate point extraction unit 16 removes the points on the horizontal scan line B because the number of points of the ship point cloud is less than the predetermined number although the distance between both ends of the points is equal to or longer than the predetermined distance. On the other hand, the side surface candidate point extraction unit 16 extracts, as the side surface candidate points, the points on the third and fourth horizontal scan lines because the distance between both ends of the points is equal to or longer than the predetermined distance and the number of points of the ship point cloud is equal to or larger than the predetermined number (see the broken line frame in FIG. 8 and FIG. 9E).

(6) Extraction of Side Surface Points

The side surface point extraction unit 17 calculates the normal lines of the side surface candidate points and performs clustering based on the normal lines. Measured points can be regarded as points on the same plane when the directions of the normal lines thereof are close to each other. Thus, the side surface point extraction unit 17 can suitably identify measured points on the side surface which constitutes the plane of the target ship as side surface points even when points other than the plane (e.g., points on the curved surface of the bow side) are included in the side surface candidate points.

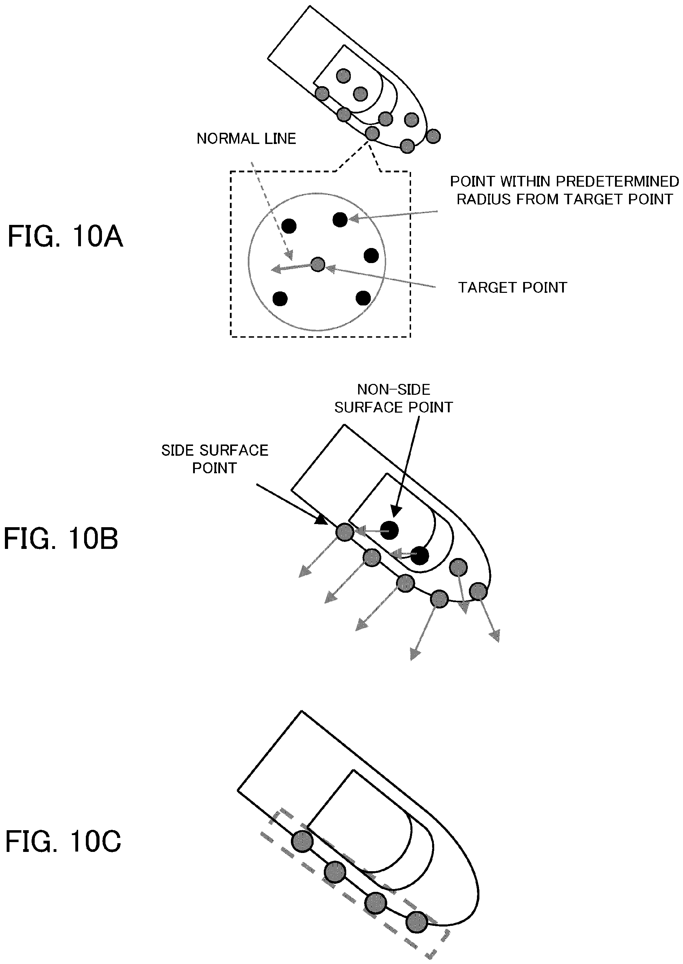

FIG. 10A is a bird's-eye view of the target ship in which the side surface candidate points are clearly shown. The side surface point extraction unit 17 selects every side surface candidate point as a target point in order, and extracts side surface candidate points within a predetermined radius (also referred to as a " threshold radius") from the target point. The balloon shown in FIG. 10A represents the process of setting a certain side surface candidate points as the target point and extracting side surface candidate points within the threshold radius from the target point.

Then, the side surface point extraction unit 17 estimates the plane based on the extracted side surface candidate points and identifies the perpendicular line from the target point to the plane as the normal line of the target point. In this case, for example, the side surface point extraction unit 17 applies a principal component analysis to the extracted side surface candidate points, and identifies the third principal component vector obtained by the principal component analysis as the normal line of the target point.

Thereafter, if the difference in the directions of the normal lines of any side surface candidate points is equal to or smaller than a predetermined value, the side surface point extraction unit 17 classifies the above-mentioned side surface candidate points as the same cluster. Then, the side surface point extraction unit 17 extracts the largest cluster as a cluster of the side surface points. FIG. 10B is a bird's-eye view of a target ship in which the direction of the normal line for each side surface candidate point is clearly shown. FIG. 10C is a bird's-eye view of the target ship with a clear indication of the largest cluster of the side surface candidate points. In FIG. 10B, the side surface candidate points other than the side surface points are denoted as the non-side surface points. According to this process, it is possible to suitably extract measured points on the planar part of the side surface of the target ship as side surface points.

Here, in some embodiments, the side surface point extraction unit 17 sets the radius threshold based on the measurement distance of the target point. In general, since the distance from the target point to the target ship varies, the direction of the normal line of the target ship is not stable when the threshold radius is constant. Therefore, by setting the threshold radius according to the measurement distance of the target point, the number of points of surrounding side surface candidate points used for calculation of the normal line regardless of the distance to the target ship and therefore it is possible to calculate the normal line of every side surface candidate point under the same conditions. For example, the side surface point extraction unit 17 increases the threshold radius of a target point with an increase in the measurement distance of the target point.

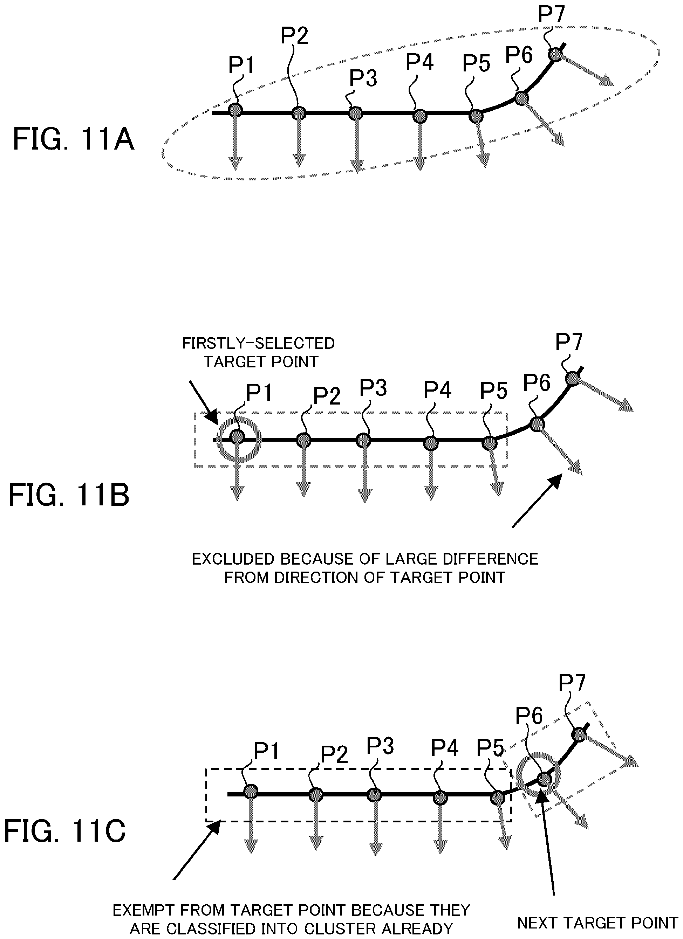

Next, the details of the clustering based on the normal lines will be supplemented. In the clustering based on the normal lines, the side surface point extraction unit 17 sets every side surface candidate point as a target point in order again. Then, the side surface point extraction unit 17 compares the normal direction of the target point with the normal direction of every side surface candidate point other than the target point, and classifies any pair of points having the difference in the normal direction smaller than a predetermined value (also referred to as "normal threshold value") into the same cluster. It is noted that a side surface candidate point that is already classified into one of the clusters is not selected as the target point. Then, the side surface point extraction unit 17 extracts the cluster having the largest number of elements as the cluster of side surface points. In this way, even if the normal directions of points are different gradually, the side surface point extraction unit 17 can avoid identifying these points as the same cluster. This will be described with reference to FIG. 11A to FIG. 11C.

FIG. 11A illustrates the side surface candidate points P1 to P7 and the directions of their normal lines. FIG. 11B illustrates the firstly-selected target point P1 and the similarity determination result of the normal directions between the target point P1 and the other side surface candidate points. In FIG. 11B, the difference in the normal direction between the target point P1 and any of the side surface candidate points P2 to P5 becomes smaller than the normal threshold value, while the difference in the normal direction between the target point P1 and any of the side surface candidate points P6 and P7 becomes equal to or larger than the normal threshold value. Consequently, the side surface candidate points P6 and P7 do not belong to the cluster formed by the side surface candidate points P1 to P5. FIG. 11C illustrates the state where the side surface candidate point P6 is selected as the target point. The side surface candidate point P6 and the side surface candidate point P7 are the same clusters because the difference in the normal direction between the target point P6 and the side surface candidate point P7 is less than the normal threshold value. Then, finally, the cluster of the side surface candidate points P1 to P5 with the largest number of elements is selected as the cluster of side surface points.

In some embodiments, clustering based on the normal lines may be performed by the following procedures (a) to (e).

(a) Clustering based on normal lines is performed using a relaxed normal threshold value.
(b) Each point-to-point distance among points selected as side surface points is calculated while ignoring their z-coordinate values
(c) The longest distance among point-to-point distances is set as the hull length.
(d) a normal threshold value tighter than (a) is set and clustering based on normal lines is performed again
(e) The cluster with the largest number of points is extracted as the cluster of side surface points.

In this process, the process of clustering is carried out twice, but it has an advantage that it can make the cluster with the actual hull length substantially, because the bow part is included in the cluster by setting the relaxed normal threshold.

(7) Removal of Curved Surface Points and Calculation of Ship Direction

Through the clustering based on the normal lines, the measured points on the continuously-planar side surface of the target ship can be extracted as side surface points, but the side surface points still include points on the gently-curved surface of the bow part of the target ship. Therefore, when the direction of the target ship is calculated using all side surface points, the correct ship's direction cannot be calculated due to the influence of the curved surface part. Therefore, in order to reduce the variance in the normal direction among the side surface points, the direction calculation unit 18 firstly removes the side surface points positioned at the end. Then, based on the remaining side surface points when the change in the variance has converged within a predetermined value, the direction calculation unit 18 calculates the direction of the target ship. Thus, the correct direction of the target ship is obtained.

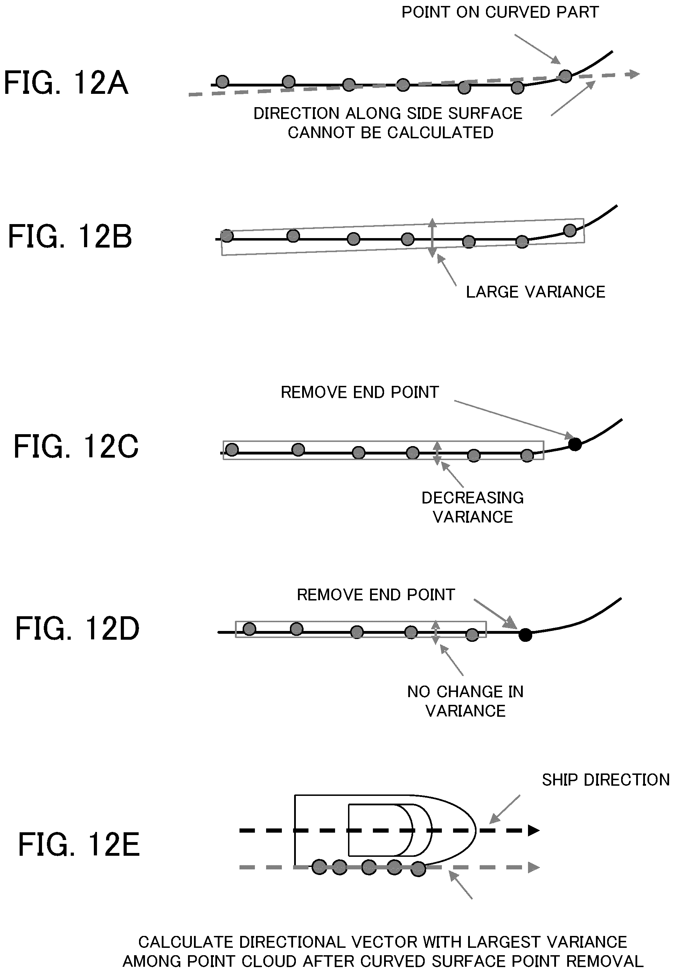

FIGS. 12A to 12E show the flow of process that is executed by the direction calculation unit 18. FIG. 12A is a view showing the side surface of a target ship with side surface points. As shown in FIG. 12A, provided that the direction of the target ship is calculated using all side surface points, the direction of the ship deviated from the original direction as the broken line is calculated due to the presence of the side surface points (i.e., curved surface point) on the curved surface part. In this case, the variance in the normal direction of the side surface (i.e., the variance with respect to the third principal component) is equal to or larger than a threshold value (see FIG. 12B).

Therefore, as shown in FIG. 12C, the direction calculation unit 18 firstly identifies the end point located at the end of the side surface points as a candidate for a curved surface point. Then, based on the remaining side surface points after the removal of the end point, the direction calculation unit 18 calculates the variance in the normal direction of the side surface. In this case, because the variance decreases and the change in the variance between the previous time and current time is equal to or larger than a predetermined value, the direction calculation unit 18 determines that the removed end point removed is a curved surface point.

Next, as shown in FIG. 12D, the direction calculation unit 18 searches for the next end point, and then, based on the side surface points after removal of the end point, calculates again the variance in the normal direction of the side surface. Then, since the change in the variance before and after the end point removal is smaller than the predetermined value, the direction calculation unit 18 determines that the end point removed this time is a planar point rather than a curved surface point. Therefore, the direction calculation unit 18 cancels the immediately-preceding removal of the end point (i.e., end point removal shown in FIG. 12D), and calculates the ship direction based on the previously-determined side surface points. Then, as shown in FIG. 12E, the direction calculation unit 18 calculates, through the principal component analysis, the directional vector (first principal component vector) having the largest variance among the side surface points after the removal of the end point corresponding to the curved surface part, and determines the X-Y components (i.e., the components in the horizontal direction) of the directional vector as the directional vector of the ship.

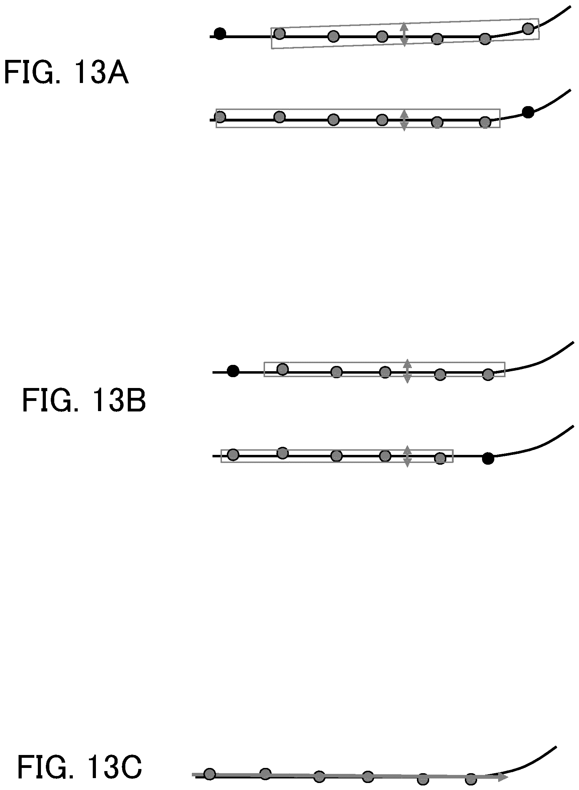

Here, a supplementary description will be given selection of end points to be removed. The direction calculation unit 18 identifies, as end points to be removed, both end points of the point cloud of the side surface points. In this case, the direction calculation unit 18 calculates each point-to-point distance among the point cloud of the side surface points while ignoring the z component of the point cloud of the side surface points, and then identifies a pair of side surface points with the longest point-to-point distance as the both end points. Then, the direction calculation unit 18 applies the principal component analysis to the point cloud after removal of one of the both ends and to the point cloud after removal of the other of the both ends, respectively and then selects one of the point clouds whichever has the smaller variance in the third principal component as the valid point cloud of the side surface points. In other words, the direction calculation unit 18 identifies, as a candidate for the curved surface point, one of the end points whichever decreases the variance in the third principal component by its removal. FIG. 13A shows an example of calculating the respective variances by removing each of the selected both end points separately.

If the change in the variance in the third principal component becomes equal to or larger than a predetermined value after removing an end point which is a candidate for the curved surface point, the direction calculation unit 18 finalizes the removal of the end point and repeats the selection process of both end points again. On the other hand, if the above-described change in the variance becomes smaller than the predetermined value, the direction calculation unit 18 identifies the previous point cloud before the immediately preceding removal of the end point ass the point cloud of the side surface points for calculating the direction of the target ship. FIG. 13B shows a state where the change from the previous variance to each variance calculated after the separate removal of the selected both end points is within the threshold value. Then, the direction calculation unit 18 calculates the direction of the target ship based on the X-Y components of the first principal component vector of the point cloud of the identified side surface points. FIG. 13C shows a straight line based on X-Y components of the first principal component vector of the point cloud of the identified side surface points.

(8) Processing Flow

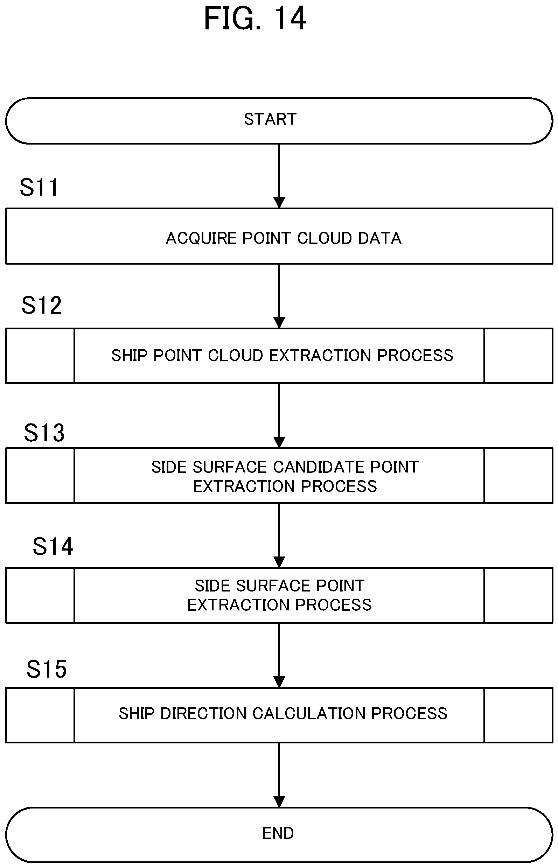

FIG. 14 is an example of a flowchart showing an outline of process (point cloud data process) related to the point cloud data in the present embodiment. The information processing device 1A repeatedly executes the process of the flowchart shown in FIG. 14 according to the frame cycle.

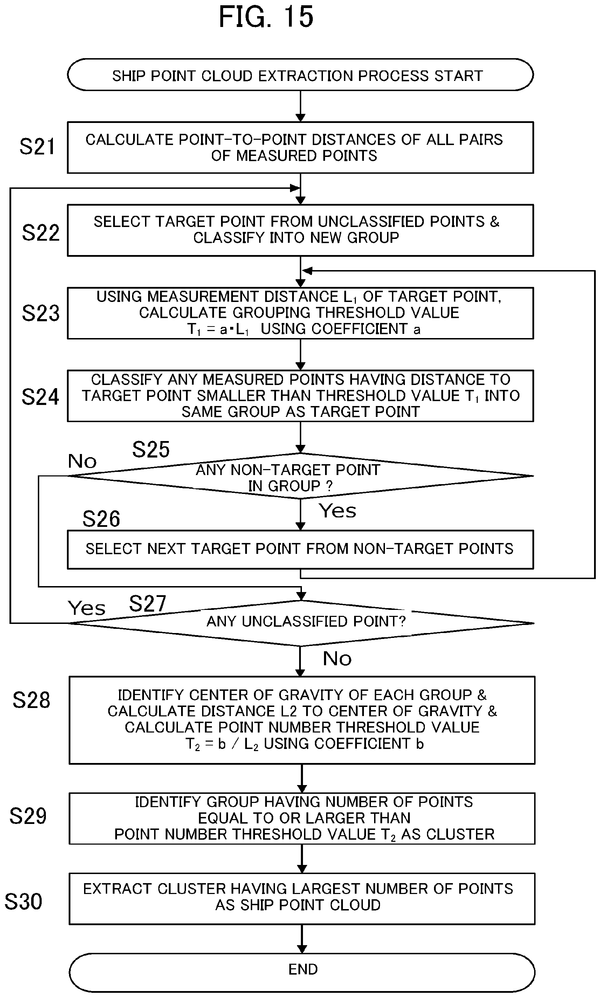

First, the information processing device 1A acquires point cloud data generated by the lidar 3 (step S11). Then, the information processing device 1A performs, based on the point cloud data, the ship point cloud extraction process which is a process of extracting the ship point cloud (step S12). A description will be given of the detail in the process at step S12 with refer to FIG. 15.

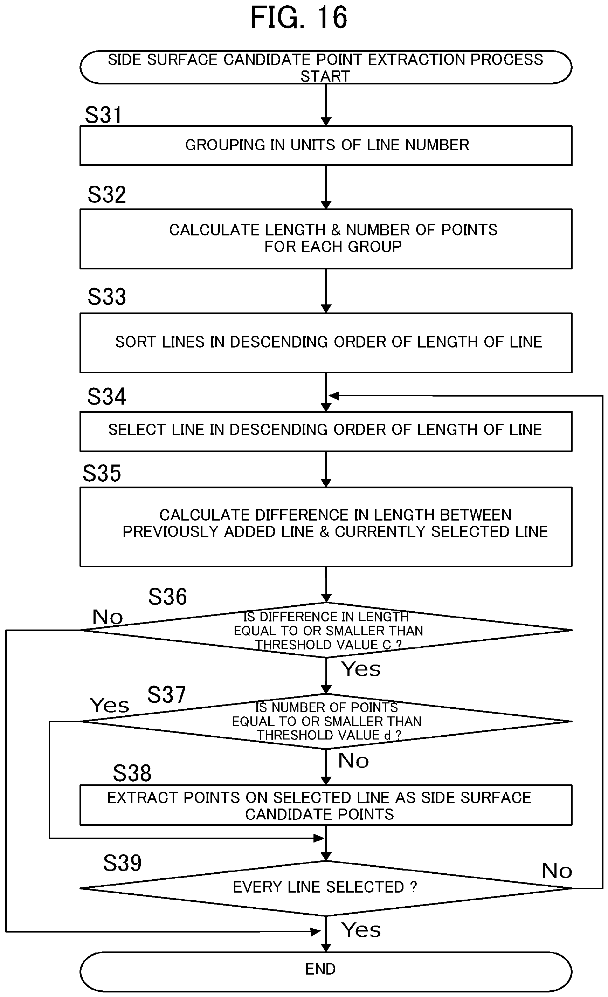

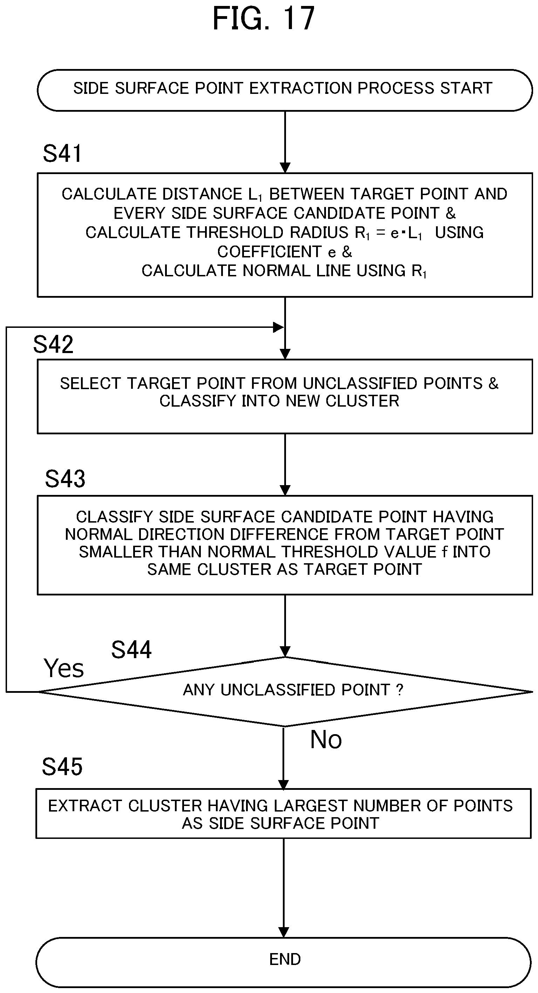

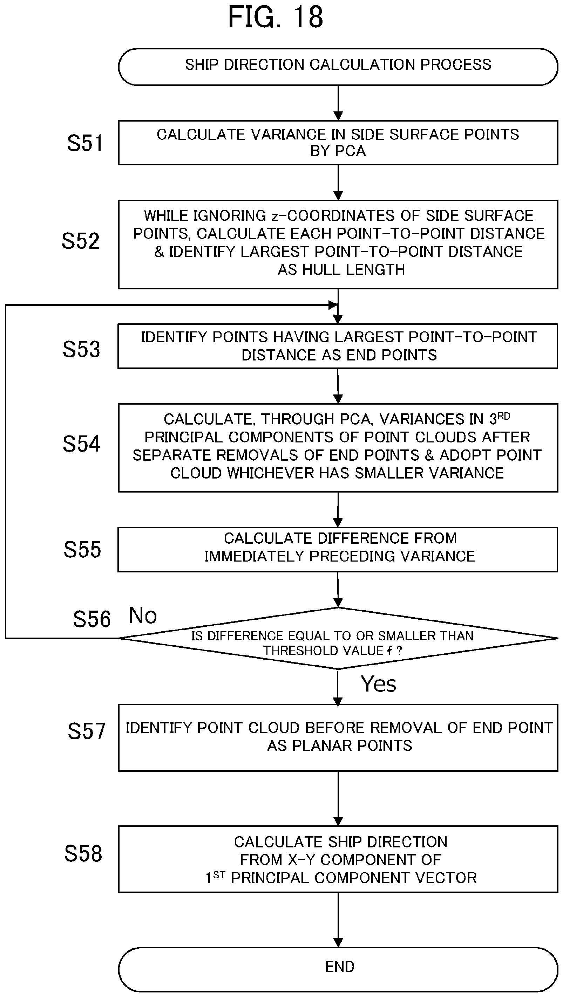

Next, the information processing device 1A executes a side surface candidate point extraction process, which is a process of extracting (a point cloud of) side surface candidate points from the ship point cloud extracted at step S12 (step S13). A description will be given of the detail in the process at step S13 with refer to FIG. 16. Furthermore, the information processing device 1A performs the side surface point extraction process, which is a process of extracting side surface points from the side surface candidate points extracted at step S13 (step S14). A description will be given of the detail in the process at step S14 with refer to FIG. 17. Furthermore, the information processing device 1A performs the ship direction calculation process, which is a process of calculating the direction of the target ship based on the side surface points extracted at step S14 (step S15). A description will be given of the detail in the process at step S15 with refer to FIG. 18. Then, the information processing device 1A transmits the ship state information IS including the information indicating the direction of the target ship to the information processing device 1B.

FIG. 15 is a flowchart of the ship point cloud extraction process performed at step S12 in FIG. 14.

First, the information processing device 1A calculates the point-to-point distances for all possible pairs of all measured points indicated by the point cloud data acquired at step S11 (step S21). When the number of all the measured points is denoted by "N", the point-to-point distances for $_NC_2$ pairs are calculated.

Next, the information processing device 1A selects a target point from the measured points (also referred to as "unclassified points") that have not been classified into any groups (clusters) yet, and classifies the target point into a new group (step S22).

Then, the information processing device 1A sets the grouping threshold value "$T_1$" as follows using the measurement distance "Li" of the target point and a predetermined coefficient "a" (step S23).

$$T_1 = a \cdot L_1$$

Next, the information processing device 1A classifies any measured point whose point-to-point distance to the target point is smaller than the grouping threshold value $T_1$ into the same group as the target point (step S24). Then, the information processing device 1A determines whether or not there is a non-target point that has not been set as the target point yet in the group (step S25). Then, upon determining that there are any non-target point(s) in the group (step S25; Yes), the information processing device 1A selects the next target point from the non-target point(s) (step S26), and then proceeds back to the process at step S23.

On the other hand, if there is no non-target point in the group (step S25; No), the information processing device 1A determines whether or not there is still an unclassified point (step S27). If there are any unclassified point(s) (step S27; Yes), the information processing device 1A proceeds back to the process at step S22 and selects the target point from the unclassified point(s).

When there is no unclassified point (step S27; No), the information processing device 1A calculates the center of gravity of each group and the distance "$L_2$" to the center of gravity, and then calculates the following point number threshold value $T_2$ using a predetermined coefficient "b" (step S28).

$$T_2 = b / L_2$$

Then, the information processing device 1A determines that any group containing the number of points equal to or larger than the point number threshold value $T_2$ is a cluster (step S29). Then, the information processing device 1A extracts the cluster with the largest number of points as the ship point cloud (step S30).

FIG. 16 is a flowchart of the side surface candidate point extraction process that is executed at step S13 in FIG. 14.

First, the information processing device 1A groups the ship point cloud in units of the line number of the horizontal scan line (step S31). Then, the information processing device 1A calculates the length and the number of points of each group (step S32). In this instance, the information processing device 1A determines the length of each group to be the length between the point corresponding to the largest horizontal number and the point corresponding to the smallest horizontal number in each group. Then, the information processing device 1A refers to the above-described length and sorts the horizontal scan lines in descending order (step S33). Then, the information processing device 1A selects the horizontal scan line in descending order of the length (step S34).

Then, the information processing device 1A calculates the difference in length between the horizontal scan line added as the side surface candidate points in the immediately-preceding process at step S38 and the horizontal scan line selected at step S34 (step S35). If the process at step S38 has never been executed, the above-described difference is set to 0.

Then, the information processing device 1A determines whether or not the difference calculated at step S35 is equal to or less than a predetermined threshold value "c" (step S36). If the above-described difference is equal to or less than the threshold value c (step S36; Yes), the information processing device 1A determines whether or not the number of points of the selected horizontal scan line is equal to or less than the threshold value d (step S37). Then, if the above-described number of points is larger than the threshold value d (step S37; No), the information processing device 1A extracts the selected horizontal scan line of the ship point cloud as the side surface candidate points (step S38). On the other hand, if the above-described difference is larger than the threshold value c (step S36; No), the information processing device 1A ends the process of the flowchart. Further, if the above-described number of points is equal to or smaller than the threshold value d (step S37; Yes), the information processing device 1A proceeds with the process at step S39 without executing the process at step S38.

Then, the information processing device 1A determines whether or not every horizontal scan line has been selected at step S34 (step 39). If every horizontal scan line has been selected (step S39; Yes), it ends the process of the flowchart. On the other hand, if there is an unselected horizontal scan line (step S39; No), it proceeds back to the process at step S34.

FIG. 17 is a flowchart of a side extraction process performed at step S14 in FIG. 14.

First, the information processing device 1A selects every side surface candidate point as the target point in order, and calculates the distances $L_1$ between the target point and any other side surface candidate points. Then, information processing device 1A calculates the following threshold radius $R_1$ using a predetermined coefficient e, and calculates the normal line of the target point using the threshold radius $R_1$ (step S41).

$$R_1 = e \cdot L_1$$

Next, the information processing device 1A selects the target point from unclassified points, which are side surface candidate points that do not belong to any of the clusters, and classifies the target point into a new cluster (step S42). Then, the information processing device 1A classifies any other side surface candidate point in such a condition that the difference in the normal direction between the target point and the side surface candidate point is smaller than the predetermined normal threshold value f into the same cluster as the target point (step S43). Then, the information processing device 1A determines whether or not there is an unclassified point (step S44). If there is an unclassified point (step S44; Yes), the information processing device 1A proceeds back to the process at step S42 and selects the target point. On the other hand, if there are no unclassified points (step S44; No), the information processing device 1A extracts the cluster having the largest number of points as the point cloud of side surface points (step S45). The cluster that is determined to have the largest number of points at step S45 is an example of the "first cluster" in the present invention.

FIG. 18 is a flowchart of the ship direction calculation process that is executed at step S15 in FIG. 14.

First, the information processing device 1A calculates the variance in the point cloud of the side surface points extracted at step S14 through principal component analysis (step S51). Then, the information processing device 1A calculates the point-to-point distance between every possible pair of side surface points while ignoring the z-coordinates of the side surface points, and sets the largest point-to-point distance as the hull length (step S52). Then, the information processing device 1A identifies the pair of side surface points corresponding to the largest point-to-point distance as the end points (both end points) (step S53).

Next, the information processing device 1A calculates, through principal component analysis, the variance in the third principal components of the point cloud of the side surface point from which the end points are separately removed, respectively, then adopts the point cloud whichever has the smaller calculated variance (step S54). Then, the information processing device 1A calculates a difference between the variance calculated at step S54 and the variance in the point cloud before the removal at step S54 (step S55). Then, the information processing device 1A determines whether or not the difference in the variance calculated at step S55 is equal to or less than the threshold value f (step S56). Then, if the difference is equal to or less than the threshold value f (step S56; Yes), the information processing device 1A identifies the point cloud before the removal of to the end point at step S54 as planar points (step S57). Then, the information processing device 1A calculates the direction of the target ship from X-Y components of the first principal component vector of the identified planar points (step S58). On the other hand, if the difference is larger than the threshold value f (step S56; No), the information processing device 1A proceeds back to the process at step S53.

(9) Calculation of Pier Distance

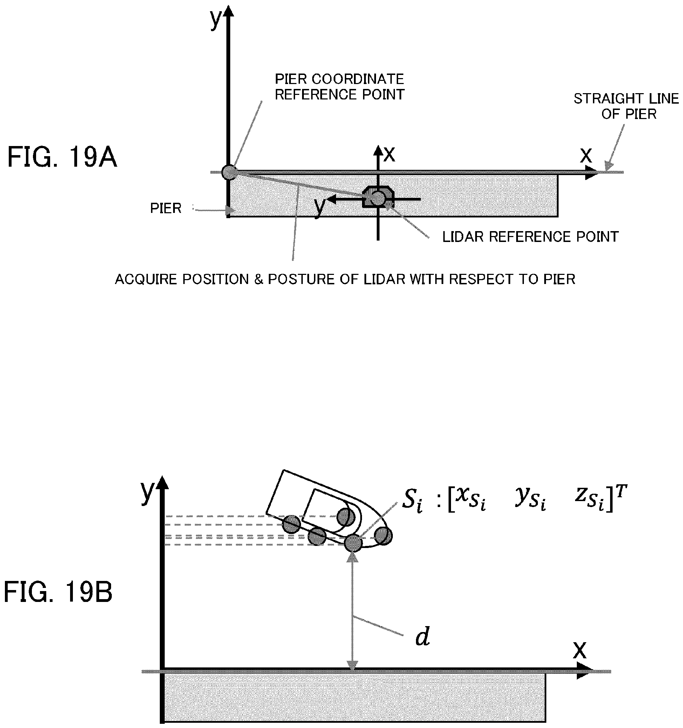

Here, the calculation of the pier distance will be supplemented. In order to obtain the pier distance, the straight line along the berthing place (hereinafter referred to as "pier") and the ship point cloud data are used. Therefore, the data necessary for obtaining them is acquired in advance. To obtain the straight line along the pier the x-axis of the pier coordinate system is used. The pier coordinate system is defined by taking the x-axis in the longitudinal direction of the pier and the y-axis in the sea direction. The reference point of the pier coordinate system is set so that the x-axis of the pier coordinate system overlaps with the boundary line between the sea and the pier. Therefore, the x-axis of the pier coordinate system becomes the straight line along the pier. FIG. 19A illustrates the coordinate system.

Since the ship point cloud data is a lidar coordinate system, the coordinate transformation to the pier coordinate system is required. Therefore, the position and posture of the lidar 3 in the pier coordinate system are acquired. For example, assuming that the lidar 3 is fixed to the jig on the pier, the position of the lidar 3 with respect to the reference point of the pier coordinate system is measured by a measure or the like, and the posture of the lidar 3 is measured by an inclinometer or the like. The equation (1) shows the coordinate transformation expression given that the point cloud acquired by lidar 3 is denoted by "P0" and the point cloud after coordinate transformation is denoted by "P1". The position and posture of lidar 3 in the pier coordinate system can be transformed into the pier coordinate system by substituting them into (x, y, z, $\varphi$, $\theta$, $\psi$).

[Math Expression 1]

$$\begin{bmatrix} P1_x \\ P1_y \\ P1_z \\ 1 \end{bmatrix} = \begin{bmatrix} 1 & 0 & 0 & x \\ 0 & 1 & 0 & y \\ 0 & 0 & 1 & z \\ 0 & 0 & 0 & 1 \end{bmatrix} \begin{bmatrix} \cos\Psi & -\sin\Psi & 0 & 0 \\ \sin\Psi & \cos\Psi & 0 & 0 \\ 0 & 0 & 1 & 0 \\ 0 & 0 & 0 & 1 \end{bmatrix} \begin{bmatrix} \cos\theta & 0 & \sin\theta & 0 \\ 0 & 1 & 0 & 0 \\ -\sin\theta & 0 & \cos\theta & 0 \\ 0 & 0 & 0 & 1 \end{bmatrix} \begin{bmatrix} 1 & 0 & 0 & 0 \\ 0 & \cos\varphi & -\sin\varphi & 0 \\ 0 & \sin\varphi & \cos\varphi & 0 \\ 0 & 0 & 0 & 1 \end{bmatrix} \begin{bmatrix} P0_x \\ P0_y \\ P0_z \\ 1 \end{bmatrix}$$

$$= \begin{bmatrix} \cos\Psi\cos\theta & \sin\theta\sin\varphi\cos\Psi - \sin\Psi\cos\varphi & \sin\theta\cos\Psi\cos\varphi + \sin\Psi\sin\varphi & x \\ \sin\Psi\cos\theta & \sin\Psi\sin\theta\sin\varphi + \cos\Psi\cos\varphi & \sin\Psi\sin\theta\cos\varphi - \sin\varphi\cos\Psi & y \\ -\sin\theta & \sin\varphi\cos\theta & \cos\theta\cos\varphi & z \\ 0 & 0 & 0 & 1 \end{bmatrix} \begin{bmatrix} P0_x \\ P0_y \\ P0_z \\ 1 \end{bmatrix}$$

Using the straight line of the pier and the ship point cloud data in the pier coordinate system, the length of the perpendicular line from a piece of the ship point cloud data to the straight line of the pier is obtained in the two-dimensional coordinate system. This is done for all pieces of the ship point cloud data, and the shortest length is taken as the pier distance. FIG. 19B shows an overview of the calculation of the pier distance. Since the straight line of the pier coincides with the x-axis of the pier coordinate system, the length "d" of the perpendicular line form a piece of the ship point cloud data to the straight line of the pier is equivalent to the y-coordinate value.

(10) Utilization of Hull Length

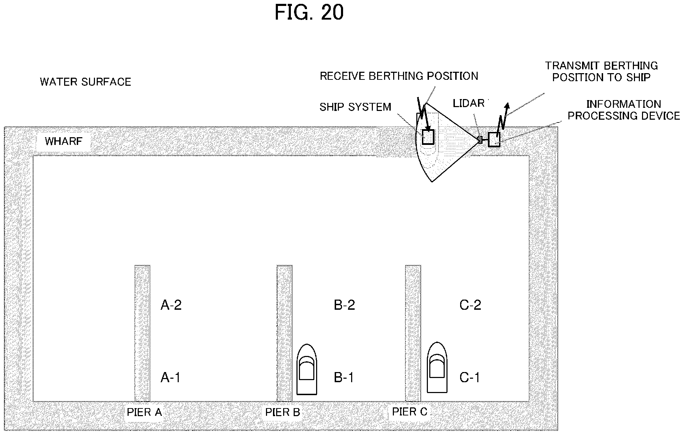

It is conceivable to use the hull length in the case of instructing the ship on the berthing position. For example, the lidar 3 and the information processing device 1A are installed near the entrance of the port, and the hull length is calculated from the ship point cloud. FIG. 20 shows an installation of the lidar 3 and the information processing device 1A. An appropriate berthing position of the target ship is determined from the approximate length of the hull, and the information is transmitted to the target ship. By providing the received information to the ship system, the ship can determine the appropriate berthing position by the ship system. In this instance, the information processing device 1A sequentially executes the following steps (a) to (d).

(a) The information processing device 1A determines the approximate length of the hull from the ship point cloud at the time of entering port measured by the lidar 3.
(b) The information processing device 1A determines the appropriate pier position from the hull length and sends it to the target ship.
(c) The target ship receives the berthing position information
(d) The ship system operates the ship based on the berthing position.

It is assumed that the ship system (i.e., information Processing device 1B) grasps the berthing position ("A-1" to "C-2" in FIG. 20) by referring to the map data regarding the pier.

As described above, the controllers 13 of the information processing device 1A functions as the acquisition unit, the cluster generation unit, and the ship direction estimation unit. The acquisition unit is configured to acquire measurement data which is a set of data representing a plurality of measured points measured by a measurement device. The cluster generation unit is configured to generate, based on normal lines of the measured points of a ship, one or more clusters of the measured points of the ship. The ship direction estimation unit is configured to estimate a direction of the ship based on a first cluster which is a cluster having a largest number of the measured points of the ship. With this aspect, the information processing device 1A can estimate the ship's direction with high accuracy.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

1A, 1B    Information processing device
3    Lidar

**Claims**

1. An information processing device comprising:

    an acquisition unit configured to acquire measurement data, which is a set of data representing a plurality of measured points measured by a measurement device;
    a cluster generation unit configured to generate, on a basis of normal lines of the measured points of a ship, one or more clusters of the measured points of the ship; and
    a ship direction estimation unit configured to estimate a direction of the ship based on a first cluster, which is the cluster having a largest number of the measured points.

2. The information processing device according to claim 1,
    wherein the acquisition unit is configured to extract, on a basis of a clustering based on distances among the plurality of the measured points, the measured points of the ship.

**3.** The information processing device according to claim 2,
wherein, in grouping the measured points on the basis of the clustering based on the distances, the acquisition unit is configured to set a threshold value, of a point-to-point distance between measured points, for determining that the measured points belong a same group, on a basis of a measurement distance of the measured points.

**4.** The information processing device according to claim 2 or 3,

wherein the acquisition unit is configured to extract the measured points of the ship,
on a basis of a group having a number of the measured points equal to or larger than a point number threshold value among groups of the measured points formed on the basis of the clustering based on the distances, and
wherein the point number threshold value is set based on measurement distances of the measured points for each of the groups.

**5.** The information processing device according to any one of claims 1 to 4,
wherein the cluster generation unit is configured to

divide the measured points of the ship into lines in a horizontal direction and
select, based on a distribution of the measured points for each of the lines, the line to be used for calculating the normal lines.

**6.** The information processing device according to any one of claims 1 to 5,
wherein the cluster generation unit is configured to calculate the normal line for each measured point of the ship, using other measured points of the ship, the other measured points existing within a threshold radius from the each measured point in accordance with a measurement distance of the each measured point.

**7.** The information processing device according to any one of claims 1 to 6,
wherein the ship direction estimation unit is configured to calculate the ship direction based on a variance in the measured points which belong to the first cluster.

**8.** The information processing device according to claim 7,
wherein the ship direction estimation unit is configured to determine,

on a basis of a difference, in the variance of a third principal component, between presence and absence of a measured point positioned at an edge among the measured points which belong to the first cluster,
whether or not to calculate the direction based on the variance including the measured point positioned at the edge.

**9.** A control method performed by a computer, comprising:

acquiring measurement data, which is a set of data representing a plurality of measured points measured by a measurement device;
generating, on a basis of normal lines of the measured points of a ship, one or more clusters of the measured points of the ship; and
estimating a direction of the ship based on a first cluster, which is the cluster having a largest number of the measured points.

**10.** A program causing a computer to:

acquire measurement data, which is a set of data representing a plurality of measured points measured by a measurement device;
generate, on a basis of normal lines of the measured points of a ship, one or more clusters of the measured points of the ship; and
estimate a direction of the ship based on a first cluster, which is the cluster having a largest number of the measured points.

**11.** A storage medium storing the program according to claim 10.

# FIG. 1

BERTHING PLACE

1A

INFORMATION PROCESSING DEVICE

LIDAR

3

IS

INFORMATION PROCESSING DEVICE

1B

TARGET SHIP

# FIG. 2

<u>1A</u>

INTERFACE 11

CONTROLLER 13

MEMORY 12

FIG. 3

FIG. 4A

FIG. 4B

FIG. 4C

EP 4 494 995 A1

FIG. 5

FIG. 6

MEASURED POINTS
OF SHIP

FIG. 7A

y

MEASURED POINTS
OTHER THAN SHIP

3

X

MEASURED POINTS
OF SHIP

83

81

82

FIG. 7B

MEASURED POINTS
OTHER THAN SHIP

80

# FIG. 8

POINT CLOUD AT STEERING ROOM
FORMS SHORT LINE

HORIZONTAL SCAN LINE

LONG LINE WITH LITTLE POINTS

POINT CLOUD AT SIDE SURFACE
FORMS LONG LINE WITH SUFFICIENT POINTS

EXTRACTED AS
SIDE SURFACE CANDIDATE POINTS

FIG. 9A

FIG. 9B

LENGTH

FIG. 9C

FIG. 9D

FIG. 9E

FIG. 10A

NORMAL LINE

POINT WITHIN PREDETERMINED
RADIUS FROM TARGET POINT

TARGET POINT

FIG. 10B

NON-SIDE
SURFACE POINT

SIDE SURFACE
POINT

FIG. 10C

FIG. 11A

P1 P2 P3 P4 P5 P6 P7

FIG. 11B

FIRSTLY-SELECTED
TARGET POINT

P1 P2 P3 P4 P5 P6 P7

EXCLUDED BECAUSE OF LARGE DIFFERENCE
FROM DIRECTION OF TARGET POINT

FIG. 11C

P1 P2 P3 P4 P5 P6 P7

EXEMPT FROM TARGET POINT BECAUSE THEY
ARE CLASSIFIED INTO CLUSTER ALREADY

NEXT TARGET POINT

FIG. 12A

POINT ON CURVED PART

DIRECTION ALONG SIDE SURFACE
CANNOT BE CALCULATED

FIG. 12B

LARGE VARIANCE

FIG. 12C

REMOVE END POINT

DECREASING
VARIANCE

FIG. 12D

REMOVE END POINT

NO CHANGE IN
VARIANCE

FIG. 12E

SHIP DIRECTION

CALCULATE DIRECTIONAL VECTOR WITH LARGEST VARIANCE
AMONG POINT CLOUD AFTER CURVED SURFACE POINT REMOVAL

FIG. 13A

FIG. 13B

FIG. 13C

# FIG. 14

START

S11

ACQUIRE POINT CLOUD DATA

S12

SHIP POINT CLOUD EXTRACTION PROCESS

S13

SIDE SURFACE CANDIDATE POINT
EXTRACTION PROCESS

S14

SIDE SURFACE POINT
EXTRACTION PROCESS

S15

SHIP DIRECTION CALCULATION PROCESS

END

# FIG. 15

```
                    SHIP POINT CLOUD EXTRACTION PROCESS START
```

S21 | CALCULATE POINT-TO-POINT DISTANCES OF ALL PAIRS OF MEASURED POINTS

S22 | SELECT TARGET POINT FROM UNCLASSIFIED POINTS & CLASSIFY INTO NEW GROUP

S23 | USING MEASUREMENT DISTANCE $L_1$ OF TARGET POINT, CALCULATE GROUPING THRESHOLD VALUE $T_1 = a \cdot L_1$ USING COEFFICIENT a

S24 | CLASSIFY ANY MEASURED POINTS HAVING DISTANCE TO TARGET POINT SMALLER THAN THRESHOLD VALUE $T_1$ INTO SAME GROUP AS TARGET POINT

S25 — No / ANY NON-TARGET POINT IN GROUP ? / Yes

S26 | SELECT NEXT TARGET POINT FROM NON-TARGET POINTS

S27 — Yes / ANY UNCLASSIFIED POINT? / No

S28 | IDENTIFY CENTER OF GRAVITY OF EACH GROUP & CALCULATE DISTANCE L2 TO CENTER OF GRAVITY & CALCULATE POINT NUMBER THRESHOLD VALUE $T_2 = b / L_2$ USING COEFFICIENT b

S29 | IDENTIFY GROUP HAVING NUMBER OF POINTS EQUAL TO OR LARGER THAN POINT NUMBER THRESHOLD VALUE $T_2$ AS CLUSTER

S30 | EXTRACT CLUSTER HAVING LARGEST NUMBER OF POINTS AS SHIP POINT CLOUD

```
                                    END
```

# FIG. 16

SIDE SURFACE CANDIDATE POINT EXTRACTION PROCESS START

S31
GROUPING IN UNITS OF LINE NUMBER

S32
CALCULATE LENGTH & NUMBER OF POINTS FOR EACH GROUP

S33
SORT LINES IN DESCENDING ORDER OF LENGTH OF LINE

S34
SELECT LINE IN DESCENDING ORDER OF LENGTH OF LINE

S35
CALCULATE DIFFERENCE IN LENGTH BETWEEN PREVIOUSLY ADDED LINE & CURRENTLY SELECTED LINE

S36
No
IS DIFFERENCE IN LENGTH EQUAL TO OR SMALLER THAN THRESHOLD VALUE c ?
Yes

S37
Yes
IS NUMBER OF POINTS EQUAL TO OR SMALLER THAN THRESHOLD VALUE d ?
No

S38
EXTRACT POINTS ON SELECTED LINE AS SIDE SURFACE CANDIDATE POINTS

S39
EVERY LINE SELECTED ?
No
Yes

END

# FIG. 17

```
┌─────────────────────────────────────────────────────┐
│      SIDE SURFACE POINT EXTRACTION PROCESS START      │
└─────────────────────────────────────────────────────┘
```

**S41**

CALCULATE DISTANCE $L_1$ BETWEEN TARGET POINT AND
EVERY SIDE SURFACE CANDIDATE POINT &
CALCULATE THRESHOLD RADIUS $R_1 = e \cdot L_1$ USING
COEFFICIENT e &
CALCULATE NORMAL LINE USING $R_1$

**S42**

SELECT TARGET POINT FROM UNCLASSIFIED POINTS &
CLASSIFY INTO NEW CLUSTER

**S43**

CLASSIFY SIDE SURFACE CANDIDATE POINT HAVING
NORMAL DIRECTION DIFFERENCE FROM TARGET POINT
SMALLER THAN NORMAL THRESHOLD VALUE f INTO
SAME CLUSTER AS TARGET POINT

**S44**

Yes ── ANY UNCLASSIFIED POINT ?

No

**S45**

EXTRACT CLUSTER HAVING LARGEST NUMBER OF POINTS
AS SIDE SURFACE POINT

```
┌─────────────────────────────────────────────────────┐
│                         END                           │
└─────────────────────────────────────────────────────┘
```

# FIG. 18

```
          ┌──────────────────────────────────────────┐
          │     SHIP DIRECTION CALCULATION PROCESS    │
          └──────────────────────────────────────────┘
                             │
                             ▼
      ┌──────────────────────────────────────────────┐
  S51 │  CALCULATE VARIANCE IN SIDE SURFACE POINTS    │
      │                  BY PCA                        │
      └──────────────────────────────────────────────┘
                             │
                             ▼
      ┌──────────────────────────────────────────────┐
      │  WHILE IGNORING z-COORDINATES OF SIDE SURFACE │
  S52 │  POINTS, CALCULATE EACH POINT-TO-POINT DISTANCE│
      │  & IDENTIFY LARGEST POINT-TO-POINT DISTANCE    │
      │                AS HULL LENGTH                  │
      └──────────────────────────────────────────────┘
                             │
                             ▼
      ┌──────────────────────────────────────────────┐
  S53 │  IDENTIFY POINTS HAVING LARGEST POINT-TO-POINT │
      │           DISTANCE AS END POINTS               │
      └──────────────────────────────────────────────┘
                             │
                             ▼
      ┌──────────────────────────────────────────────┐
      │  CALCULATE, THROUGH PCA, VARIANCES IN 3RD      │
  S54 │  PRINCIPAL COMPONENTS OF POINT CLOUDS AFTER    │
      │  SEPARATE REMOVALS OF END POINTS & ADOPT POINT │
      │  CLOUD WHICHEVER HAS SMALLER VARIANCE          │
      └──────────────────────────────────────────────┘
                             │
                             ▼
      ┌──────────────────────────────────────────────┐
  S55 │       CALCULATE DIFFERENCE FROM                │
      │     IMMEDIATELY PRECEDING VARIANCE             │
      └──────────────────────────────────────────────┘
                             │
                             ▼
  S56   No    ◇ IS DIFFERENCE EQUAL TO OR SMALLER THAN ◇
              ◇          THRESHOLD VALUE f ?           ◇
                             │ Yes
                             ▼
      ┌──────────────────────────────────────────────┐
  S57 │ IDENTIFY POINT CLOUD BEFORE REMOVAL OF END POINT│
      │              AS PLANAR POINTS                  │
      └──────────────────────────────────────────────┘
                             │
                             ▼
      ┌──────────────────────────────────────────────┐
      │        CALCULATE SHIP DIRECTION                │
  S58 │        FROM X-Y COMPONENT OF                   │
      │     1ST PRINCIPAL COMPONENT VECTOR             │
      └──────────────────────────────────────────────┘
                             │
                             ▼
          ┌──────────────────────────────────────────┐
          │                   END                     │
          └──────────────────────────────────────────┘
```

**FIG. 19A**

PIER COORDINATE
REFERENCE POINT

STRAIGHT LINE
OF PIER

PIER

LIDAR REFERENCE POINT

ACQUIRE POSITION & POSTURE OF LIDAR WITH RESPECT TO PIER

**FIG. 19B**

$$S_i : [x_{S_i} \quad y_{S_i} \quad z_{S_i}]^T$$

$d$

# FIG. 20

WATER SURFACE

RECEIVE BERTHING POSITION

TRANSMIT BERTHING
POSITION TO SHIP

SHIP SYSTEM

LIDAR

INFORMATION
PROCESSING DEVICE

WHARF

A-2

B-2

C-2

A-1

B-1

C-1

PIER A

PIER B

PIER C

## INTERNATIONAL SEARCH REPORT

| International application No. |
|---|
| **PCT/JP2022/011586** |

### A. CLASSIFICATION OF SUBJECT MATTER

**B63B 49/00**(2006.01)i; **B63B 79/10**(2020.01)i
FI: B63B79/10; B63B49/00 Z

According to International Patent Classification (IPC) or to both national classification and IPC

### B. FIELDS SEARCHED

Minimum documentation searched (classification system followed by classification symbols)

B63B49/00; B63B79/10; G06T7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | 闫晓飞ら, 基于激光三維視覚的船舶靠泊動態監測技術, 激光与紅外, December 2016, vol. 46, term 12, pp. 1452-1458, DOI: 10.3969/j.issn.1001-5078.2016.12.003, ISSN 1001-5078 (YAN, Xio-fei et al. Ship berthing dynamic monitoring technology based on laser 3D vision. Laser & Infrared.) pp. 1452-1457 | 1-2, 5-7, 9-11 |
| Y | WANG, Ji, HUO, Shilin, LIU, Yujun, LI, Rui, LIU, Zhoungchi, Research of fast poin cloud registration method in construction error analysis of hull blocks, International Journal of Naval Architecture and Ocean Engineering, 05 August 2020, vol. 12, pp. 605-616, DOI: 10.1016/j.ijnaoe.2020.06.006, ISSN 2092-6782 pp. 606-615 | 1-2, 5-7, 9-11 |
| Y | 松川瞬, 板倉賢一, 早野明, 鈴木幸司, 岩盤における不連続面の自動推定に向けた3次元点群データの可変格子分割法, Journal of MMIJ, 01 November 2017, vol. 133, no. 11, pp. 256-263, DOI: 10.2473/journalofmmij.133.256, ISSN 1884-0450 (online),1811-6118 (print) (MATSUKAWA, Shun, ITAKURA, Kenichi, HAYANO, Akira, SUZUKI, Koji. Variable-Box Segmentation of a Three-Dimensional Point Cloud for Automatic Estimation of Discontinuities in Rock Mass.) pp. 256-261 | 1-2, 5-7, 9-11 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/011586**

**C. DOCUMENTS CONSIDERED TO BE RELEVANT**

| Category* | Citation of document, with indication, where appropriate, of the relevant passages | Relevant to claim No. |
|---|---|---|
| Y | JP 2018-41142 A (THE UNIVERSITY OF TOKYO) 15 March 2018 (2018-03-15) paragraphs [0009]-[0048], fig. 1-4 | 1-2, 5-7, 9-11 |
| Y | CN 110136178 B (INFORMATION ENGINEERING UNIVERSITY) 25 June 2021 (2021-06-25) paragraphs [0096]-[0181], fig. 1-5 | 1-2, 5-7, 9-11 |
| A | CHEN, Chen, LI, Ying, Ship Berthing Information Extraction System Using Three-Dimensional Light Detection and Ranging Data, Journal of Marine Science and Engineering, 06 July 2021, vol. 9, Iss. 7, pp. 1-19, DOI: 10.3390/jmse9070747, ISSN 2077-1312 entire text, all drawings and tables | 1-11 |

Form PCT/ISA/210 (second sheet) (January 2015)

**INTERNATIONAL SEARCH REPORT**
Information on patent family members

International application No.

**PCT/JP2022/011586**

| Patent document cited in search report | | | Publication date (day/month/year) | Patent family member(s) | Publication date (day/month/year) |
|---|---|---|---|---|---|
| JP | 2018-41142 | A | 15 March 2018 | (Family: none) | |
| CN | 110136178 | B | 25 June 2021 | (Family: none) | |

Form PCT/ISA/210 (patent family annex) (January 2015)

## EP 4 494 995 A1

**Patent documents cited in the description**

- JP 2020059403 A